# EUROPEAN PATENT APPLICATION

(11) **EP 3 680 634 A1**
(43) Date of publication of application: **15.07.2020**
(21) Application number: 19151500.6
(22) Date of filing: 11.01.2019
(51) Int. Cl.: G01J 3/02, G01J 3/46, G01J 3/52, G01J 3/50

(54) **PRODUCT COLOR CORRECTING METHOD AND PRODUCT COLOR CORRECTING SYSTEM**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a product color correcting method and a product color correcting system. The product color correcting method comprises: an acquiring step to acquire current color parameters of a product by using a mobile terminal to photograph the product; a comparing step to obtain a comparison result by comparing the current color parameters of the product with target color parameters of the product, and to output the comparison result as a color parameter bias between the target color parameters of the product and the current color parameters of the product; and, a correcting step to acquire, based on a first corresponding relationship between a pre-stored color parameter bias and a correction to the formulation for the color of the product, the correction to the formulation for the color of the product corresponding to the color parameter bias output in the comparing step. According to the present invention, it is capable of shortening the cycle of formulation update or color calibration and change so as to meet the requirement of fast generation.

## Description

### Technical Field

The present invention relates to the technology of product color coating/coloring, especially a product color correcting method and a product color correcting system implemented by the use of computers.

### Background Art

In the industrial production, requirements of the overall color or the color of surface coating of a product would usually be high. As deviations occur in the color of a product, or as a product's color needs to be changed or updated, adjustments will be necessary to the product's formulation or process parameters.

In the prior art, when deviations occur in the color of a product or a product's color needs to be changed or updated, adjustments are made by human inspection or by spectrophotometer.

With adjustments by human inspection, adjustments will be made by adjustors' experiences, in the case of which subjective factors play a big part, the requirement of adjustors' experiences is high.

With adjustments by spectrophotometer, spectrophotometers are incapable of measuring a wet sample, e.g., paint, and measuring an irregular sample. In the other aspect, spectrophotometers are incapable of remote measurement and evaluation and measuring the color of a fragile article. Instead, spectrophotometers may merely measure the color of a certain spot of an article, with low anti-interference and high randomness.

Thus, it is necessary to provide a product color correcting method and a product color correcting system without the subjective influence from adjustors and, meanwhile, the capability of remote measurement and comparison.

The information disclosed in the portion of Background Art is intended only for facilitate deeper understanding of the general background of the present invention, which should not be deemed an admission or an suggestion in any forms that the information forms an prior art well known to those skilled in the art.

### Summary

In terms of this, the present invention is intended for providing a product color correcting method and a product color correcting system that can perform remote measurement and comparison just by using a simple camera of a mobile terminal and support of a database.

In one aspect of the present invention, the product color correcting method comprises:
an acquiring step to acquire current color parameters of a product by using a mobile terminal to photograph the product;
a comparing step to obtain a comparison result by comparing the current color parameters of the product with target color parameters of the product, and to output the comparison result as a color parameter bias output between the target color parameters of the product and the current color parameters of the product; and,
a correcting step to acquire, based on a first corresponding relationship between a pre-stored color parameter bias and a correction to the formulation for the color of the product , the correction to the formulation for the color of the product corresponding to the color parameter bias output in the comparing step.

Preferably, the method further comprises between the acquiring step and the comparing step the following steps:
a calibrating step to calibrate the current color parameters of the product acquired by the acquiring step, and obtain calibrated current color parameters of the product,
wherein, in the comparing step, the calibrated current color parameters of the product are compared with the target color parameters of the product and, as the comparison result, the color parameter bias between the calibrated current color parameters of the product and the target color parameters of the product is output;
wherein, in the correcting step, the correction to the formulation for the color of the product corresponding to the color parameter bias between the calibrated current color parameters and the target color parameters of the product is obtained based on the first corresponding relationship.

Preferably, the method further comprises after the correcting step the following step:
a transmitting step for transmitting the correction to the formulation to a production site of the product.

Optionally and preferably, in the acquiring step, the product color is photographed, as the current color parameters of the product, to acquire RGB parameters.

Preferably, in the calibrating step, a colorimetric standard product photographed in a photographing condition that is the same as the photographing condition of the product is employed to calibrate the current color parameters of the product obtained in the acquiring step, so as to acquire the calibrated current color parameter of the product.

Preferably, the comparing step comprises:
comparing calibrated current RGB parameters of the product with target RGB parameters of the product; and
a difference value is obtained between the calibrated current RGB parameters of the product and the target RGB parameters of the product as the color parameter bias, .

Preferably, the correcting step comprises the following sub-steps:
pre-storing the first corresponding relationship between the color parameter bias and the correction to the formulation for the color of the product, and pre-storing a second corresponding relationship between the color parameter bias and relevant potential causes;
acquiring, based on the comparison result, the correction to the formulation for the color of the product corresponding to the color parameter bias, as well as the relevant potential causes, according to the first corresponding relationship and the second corresponding relationship; and,
providing, based on the probability sequence of the occurrence of each of the relevant potential causes, the correction to the formulation of a plurality of the product colors with a priority sequence.

Preferably, in the correcting step, it is unnecessary to correct the product color by default if the color parameter bias is within a preset value range.

Preferably, the product is one or more types as follows: a polyurethane paint, polycarbonate, and a polycarbonate composition,
in which the polyurethane paint comprises polyurethane water-based paints.

In the other aspect of the present invention, the product color correcting system comprises:
a color parameter acquiring component configured for acquiring current color parameters of a product, optionally comprised in a mobile terminal; and
a correction providing component configured for comparing the current color parameters of the product with target color parameters of the product to obtain a comparison result, outputting the comparing result as a color parameter bias between the target color parameters of the product and the current color parameters of the product, and acquiring, based on a first corresponding relationship between a pre-stored color parameter bias and a correction to the formulation for the color of the product, the correction to the formulation for the color of the product corresponding to the color parameter bias, wherein the correction providing component is optionally comprised in the mobile terminal together with the color parameter acquiring component or in in a backend server distant from the mobile terminal.

Accordingly, in one alternative, the color parameter acquiring component is implemented by using a mobile terminal, the correction providing component is implemented by a backend server; or, in other words, the color parameter acquiring component is disposed in a mobile terminal, and the correction providing component is disposed in a backend server.

In another alternative, the color parameter acquiring component and the correction providing component are implemented by using the mobile terminal; or, in other words, the color parameter acquiring component and the correction providing component are both comprised in a mobile terminal.

Preferably, the mobile terminal comprises:
a camera for photographing a color image of a product;
a color parameter acquiring module for acquiring current color parameters of the product based on the color image;
a calibrating module for calibrating the current color parameters of the product, and obtaining calibrated current color parameters of the product; and
a first communicating module for communicating with the backend server.

Preferably, the camera is intended for photographing a product and a prepared colorimetric standard product in the same photographing condition,
the color parameter acquiring module intended for acquiring current color parameters of the product and color parameters of the colorimetric standard product, the calibrating module intended for calibrating the current color parameters of the product based on the color parameters of the colorimetric standard product and obtaining calibrated current color parameters of the product.

Preferably, the backend server comprises:
a database for pre-storing target color parameters of the product, and a first corresponding relationship between a color parameter bias and a correction to the formulation for the color of the product;
a second communicating module for communicating with the mobile terminal to receive the calibrated current color parameters of the product;
a computing module for comparing the calibrated current color parameters of the product received by the second communicating module with the target color parameters of the product stored in the database to obtain the color parameter bias, and computing, based on the first corresponding relationship, the correction to the formulation for the color of the product corresponding to the color parameter bias.

Preferably, the database further stores a second corresponding relationship between the color parameter bias and relevant potential causes;
the computing module computes the probability sequence of the occurrence of the relevant potential causes based on the second corresponding relationship;

Preferably, the computing module provides, based on the probability sequence of the occurrence of the relevant potential causes, the correction to the formulation of a plurality of the product colors with a priority sequence.

Preferably, the second communicating module is further intended for communicating with a production site to transmit the correction to the formulation for the color of the product to the production site.

Preferably, the product is one or more types as follows: a polyurethane paint, polycarbonate and a polycarbonate composition, in which the polyurethane paint comprises polyurethane water-based paints.

Alternatively, the mobile terminal comprises:
a camera for photographing a color image of a product;
a color parameter acquiring module for acquiring current color parameters of the product based on the color image; and
a calibrating module for calibrating the current color parameters of the product, and obtaining calibrated current color parameters of the product;
a database for pre-storing target color parameters of the product, and a first corresponding relationship between a color parameter bias and a correction to the formulation for the color of the product; and
a computing module for comparing the calibrated current color parameters of the product with the target color parameters of the product stored in the database to obtain the color parameter bias, and computing, based on the first corresponding relationship, the correction to the formulation for the color of the product corresponding to the color parameter bias.

The mobile terminal of the present invention is characterized in: comprising:
a camera for photographing a color image of a product;
a color parameter acquiring module for acquiring current color parameters of the product based on the color image; and
a calibrating module for calibrating the current color parameters of the product by using a prepared colorimetric standard product, and obtaining calibrated current color parameters of the product.

The backend server of the present invention is characterized in: comprising:
a database for pre-storing target color parameters of the product, and a first corresponding relationship between a color parameter bias and a correction to the formulation for the color of the product;
a communicating module for receiving, from a mobile terminal, current color parameters of the product; and
a computing module for comparing calibrated current color parameters of the product with the target color parameters of the product stored in the database to obtain the color parameter bias, and computing, based on the first corresponding relationship, the correction to the formulation for the color of the product corresponding to the color parameter bias.

Preferably, the database further pre-stores a second corresponding relationship between the color parameter bias and relevant potential causes, the computing module computes, based on the second corresponding relationship, the probability sequence of the occurrence of the relevant potential causes.

Preferably, the computing module provides, based on the probability sequence of the occurrence of the relevant potential causes, the correction to the formulation of a plurality of the product colors with a priority sequence.

In one aspect of the present invention, the mobile terminal comprises:
a camera for photographing a color image of a product;
a color parameter acquiring module for acquiring current color parameters of the product based on the color image;
a calibrating module for calibrating the current color parameters of the product, and obtaining calibrated current color parameters of the product;
a database for pre-storing target color parameters of the product, and a first corresponding relationship between a color parameter bias and a correction to the formulation for the color of the product; and
a computing module for comparing the calibrated current color parameters of the product with the target color parameters of the product stored in the database to obtain the color parameter bias, and computing, based on the first corresponding relationship, the correction to the formulation for the color of the product corresponding to the color parameter bias.

The computer-readable memory medium with a computer program stored thereon of the present invention is characterized in: when the program is executed by a processor, the product color correcting method is implemented.

The computer device of the present invention comprises a memory, a processor and a computer program stored in a memory and executable in a processor, and is characterized in: when the processor executes the computer program, the product color correcting method is implemented.

As described above, according to the product color correcting method and the product color correcting system of the present invention, if the color of a product of a production site has a bias, or if it is necessary to update or change the color of a product, with a simple camera lens of mobile terminal (e.g., a smart phone) and the data support of a backend server, a bias may be found between the color of a current product and a target color, based on which a correction to the formulation for the color of the product may be provided for the production site. This will shorten the cycle of formulation update or color calibration and change so as to meet the requirement of fast generation.

Through the figures included in the text together with the embodiments to explain some principles of the present invention, all the features and merits of the method and devices of the present invention would become more concrete and clear or expounded.

### Description of Figures

Fig. 1 is a flow chart illustrating the product color correcting method of one embodiment of the present invention.
Fig. 2 is a frame diagram illustrating the product color correcting system of one embodiment of the present invention.
Fig. 3 is a frame diagram illustrating the product color correcting system of one transformed embodiment of the present invention.

### Detailed Description

The following are some of a plurality of embodiments of the present invention, which are intended for providing a basic understanding of the present invention, rather than for determining the crucial or decisive factors of the present invention or defining the scope to be protected.

In the Description of the present invention, the expressions, such as "comprise" and "include", indicate the units and steps directly and definitely described in the Description or the Claims; apart from that, the technical solution of the present invention does not exclude the case that there are other units and steps not directly and definitely stated.

In the Description of the present invention, rather than the sequence in the aspect of the time, space and size of units, the expressions such as "first" and "second" are purely for the use of discriminating information names or component names.

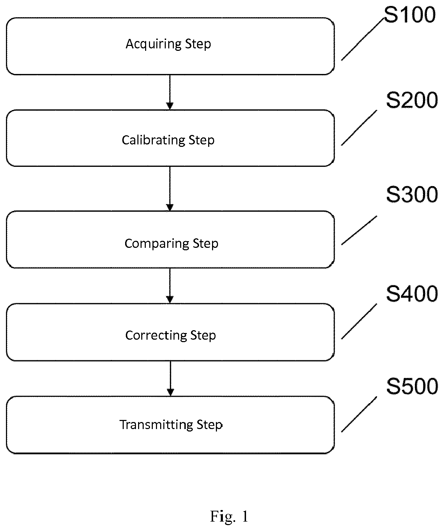

Fig. 1 is a flow chart illustrating the product color correcting method of one embodiment of the present invention.

As shown in Fig. 1, the product color correcting method of one embodiment of the present invention comprises:
an acquiring step S100 to acquire current color parameters of a product by using a mobile terminal to photograph the product on a production site of the product;
a calibrating step S200 to calibrate at the mobile terminal the current color parameters of the product acquired by the acquiring step S100, and output and transmit calibrated current color parameters of the product to a backend server;
a comparing step S300 to compare at the backend server the calibrated current color parameters with the target color parameters, and output a color parameter bias between the calibrated current color parameters and the target color parameters;
a correcting step S400 to pre-store a first corresponding relationship between the color parameter bias and a correction to the formulation for the color of the product, and acquire, based on the first corresponding relationship, the correction to the formulation for the color of the product corresponding to the color parameter bias output in the comparing step; and
a transmitting step S500 to transmit the correction to the formulation to a production site so as to adjust the formulation of the production site.

Subsequently, the concrete content of the steps will be elaborated.

In the acquiring step S100, a mobile terminal is employed to photograph a product on a production site of the product and analyze imaging results so as to capture color parameters of the imaging (namely, current color parameters of the product).

Here, RGB parameters are used as the color parameters widely employed, which, certainly, are not limited to the RGB parameters in the present invention and may also be color parameters such as CMYK parameters. In the case of the employment of RGB parameters, after the mobile terminal photographs the product, for example, one spot will be selected manually to read color parameters, i.e., if a certain position of an imaged picture is clicked, the value of RGB parameters of the position may be read. Thus, color parameters of any position of a product may be readily collected in this manner; rather, this is incapable of enabling this by a common spectrophotometer.

Next, in the calibrating step S200, the color parameters acquired, as an embodiment, may be calibrated as follows:
preparing a colorimetric standard product;
photographing the colorimetric standard product in a photographing condition that is the same as the photographing condition of the acquiring step S100, and acquiring, like the acquiring step S100, color parameters of the colorimetric standard product;
calibrating, according to the color parameters of the colorimetric standard product, the color parameters of the product obtained in the acquiring step S100, thereby obtaining calibrated color parameters of the product.

Here, the same photographing condition, for example, indicates: provided that a work table may provide a proper condition for photographing (including: light source intensity, direction, photographing angle, etc.), the product and the colorimetric standard product may be photographed on this work table.

Or, as another embodiment, the calibration may be performed as follows:
In the acquiring step S100, the product and the prepared colorimetric standard product are simultaneously photographed in the same condition; next, their RGB parameters are read to acquire the RGB parameters of the product and the RGB parameters of the colorimetric standard product. Then, in the calibrating step S200, the RGB parameters of the product are calibrated based on the RGB parameters of the colorimetric standard product to obtain calibrated color parameters of the product.

The color parameters and their one-to-one corresponding formulation information are pre-stored in the backend server. Moreover, the color parameters of the backend server are all relative parameters calibrated by the colorimetric standard product. And, a first corresponding relationship between the color parameter bias and a correction to the formulation for the color of the product is pre-stored in the backend server. In the correcting step S400, a correction to the formulation for the color of the product corresponding to the color parameter bias output by the comparing step is obtained based on the first corresponding relationship. Further, in the correcting step S400, after the backend server receives calibrated color parameters of an actually manufactured product (also called relative parameters) that are transmitted from the mobile terminal, the calibrated color parameters are compared with target color parameters of the original design stored in the database of the backend server; according to the bias between them, the backend server computes according to its database potential causes for the bias. To be specific, the following steps, for example, may be included in the correcting step S400:
pre-storing the first corresponding relationship between the color parameter bias and the correction to the formulation for the color of the product, and pre-storing a second corresponding relationship between the color parameter bias and relevant potential causes;
acquiring, based on the comparison result, the correction to the formulation for the color of the product corresponding to the color parameter bias, as well as the relevant potential causes, according to the first corresponding relationship and the second corresponding relationship; and
providing based on the probability sequence of the occurrence of each of the relevant potential causes, the correction to the formulation of a plurality of the product colors with a priority sequence.

Preferably, corrections to the formulation, e.g., Top 3 (first three) or Top 5 (first five), may be provided according to the probability sequence of the occurrence of each problem.

For instance, the provision may be performed based on the probabilities of the occurrence of potential causes listed from high to low in the following table.

| Potential Causes for Color Parameter Bias | Probability of Potential Cause Occurrence | Main Content of Potential Causes | Correction to Formulation |
|---|---|---|---|
| Potential Cause (1) | 90% | Additive AA Added | Correction to Formulation 001 |
| Potential Cause (2) | 80% | Additive BB Reduced | Correction to Formulation 002 |
| Potential Cause (3) | 75% | Additive CC Added | Correction to Formulation 003 |
| Potential Cause (4) | 70% | Additive DD Reduced | Correction to Formulation 004 |
| Potential Cause (5) | 60% | Additive EE Added | Correction to Formulation 005 |

The product color correcting method of the present invention may be applied to the coating/coloring process of a variety of industrial products. For example, the color of the following products may be corrected: a polyurethane paint, polycarbonate and a polycarbonate composition, in which the polyurethane paint comprises polyurethane water-based paints.

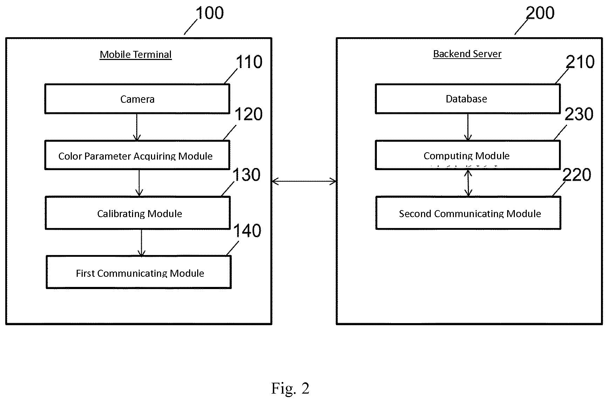

Fig. 2 is a frame diagram illustrating the product color correcting system of one embodiment of the present invention.

As illustrated by Fig. 2, the product color correcting system of one embodiment of the present invention comprises:
a mobile terminal 100 for acquiring color parameters of a product, calibrating obtained current color parameters of the product and obtaining calibrated color parameters of the product; and

A backend server 200 for comparing the current color parameters of the product with target color parameters of the product, pre-storing a first corresponding relationship between the color parameter bias and the correction to the formulation for the color of the product, pre-storing a second corresponding relationship between the color parameter bias and relevant potential causes, and acquiring, based on the first corresponding relationship, the correction to the formulation for the color of the product corresponding to the color parameter bias.

Wherein, the mobile terminal 100 comprises:
a camera 110 for photographing color images of the product and of a prepared colorimetric standard product;
a color parameter acquiring module 120 for acquiring, based on the color images, color parameters of the product;
a calibrating module 130 for calibrating the color parameters of the product and obtaining calibrated color parameters of the product; and
a first communicating module 140 for communicating with the backend server 200.

To be specific, the camera 110 may be used to photograph the product and the prepared colorimetric standard product in the same photographing condition. The color parameter acquiring module 120 is intended for acquiring the color parameters of the product and the color parameters of the colorimetric standard product, and the color parameter acquiring module 120 may be implemented by existing applications, e.g., some applications may identify RGB parameters of images already. The calibrating module 130 calibrates the color parameters of the product based on the color parameters of the colorimetric standard product, and obtains calibrated color parameters of the product. The first communicating module 140 transmits the calibrated color parameters of the product to the backend server 200.

Wherein, the backend server 200 comprises:
the database 210 for pre-storing target color parameters of the product, and storing basic data, such as the first corresponding relationship of each of the color parameters and the formulation for color as well as the second corresponding relationship of the color parameter bias and relevant potential causes;
a second communicating module 220 for receiving from the mobile terminal the calibrated color parameters of the product, and transmitting to a production site the correction to the formulation obtained through the computation of the following computing module; and
a computing module 230 for comparing the calibrated color parameters of the product received by second communicating module 220 with the target color parameters of the product stored in the database 210 to obtain the color parameter bias, and computing, based on the basic data such as the first and second corresponding relationships stored in the database 210, the correction to the formulation for the color of the product.

In this embodiment here, the color parameter acquiring module 120 of the mobile terminal 100 acquires RGB parameters as the color parameters of the product. Moreover, the camera 110 photographs in the same photographing condition the colorimetric standard product and the product, the color parameter acquiring module 120 acquires the RGB parameters of the colorimetric standard product and the RGB parameters of the product, and, next, the calibrating module 130 calibrates the RGB parameters of the product based on the RGB parameters of the colorimetric standard product, thereby obtaining calibrated RGB parameters of the product.

Wherein, the computing module 230, in the backend server 200, compares the calibrated RGB parameters of the product received by the second communicating module 220 with the target RGB parameters of the product stored in the database 210 to obtain the color parameter bias between them, and computes a correction to the formulation based on the first corresponding relationship stored in the database 210, especially, the computing module 230 provides, based on the probability sequence of the occurrence of the relevant potential causes, the correction to the formulation of a plurality of the product colors with a priority sequence.

To be specific, the computing module 230 compares the calibrated RGB parameters with the target RGB parameters of the original design stored in the database 210 of the backend server 200. According to the bias between them, the computing module 230 of the backend server computes, according to the second corresponding relationship, potential causes for the bias. Moreover, corrections to the formulation, e.g., Top 3 (first three) or Top 5 (first five), may be provided according to the probability sequence of the occurrence of each problem to the production site by the second communicating module 220.

Subsequently, elaboration will be given to one transformed example of the product color correcting system of the present invention.

In the product color correcting system described above, corrections to the color of the product are implemented by the mobile terminal and the backend server. Here, we may also make a transformation in this manner: integrating the function fulfilled by the backend server into the mobile terminal as well. As such, it is unnecessary for the backend server to join, and only the mobile terminal may enable the product color correcting system of the present invention. Except the transformation, the product color correcting system of this transformed example is implemented by the basically same principle of the product color correcting system described in above embodiment.

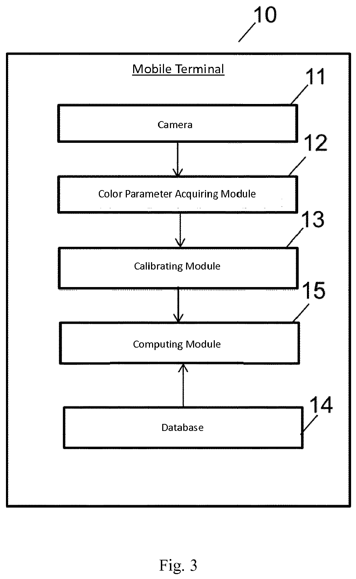

Fig. 3 is a frame diagram illustrating the product color correcting system of one transformed example of the present invention.

As illustrated in Fig. 3, the mobile terminal 10 of the transformed example comprises:
a camera 11 for photographing color images of the product;
a color parameter acquiring module 12 for acquiring, based on the color images, current color parameters of the product;
a calibrating module 13 for calibrating the current color parameters of the product and obtaining calibrated current color parameters of the product;
a database 14 for pre-storing target color parameters of the product, and a first corresponding relationship between a color parameter bias and a correction to the formulation for the color of the product; and
a computing module 15 for comparing calibrated current color parameters of the product with the target color parameters of the product stored in the database to obtain the color parameter bias, and computing, based on the first corresponding relationship, the correction to the formulation for the color of the product corresponding to the color parameter bias.

The product color correcting system of the present invention may be applied to the coating/coloring process of a variety of industrial products. For example, the color of the following products may be corrected: a polyurethane paint, polycarbonate and a polycarbonate composition, in which the polyurethane paint comprises polyurethane water-based paints.

As described above, according to the product color correcting method and the product color correcting system of the present invention, if the color of a product of a production site has a bias, or if it is necessary to update or change the color of a product, with a simple camera lens of mobile terminal (e.g., a smart phone) and the data support of a backend server, a bias may be found between the color of a current product and a target color, based on which a correction to the formulation for the color of the product may be provided for the production site. This will shorten the cycle of formulation update or color calibration and change so as to meet the requirement of fast generation.

Further, the present invention provides a computer readable memory medium with a computer program stored thereon, which is characterized in: when the program are executed by a processor, the product color correcting method is implemented.

Furthermore, the present invention provides a computer device, comprising: a memory, a processor and a computer program stored in a memory and executable in a processor, characterized in: when the processor executes the computer program, the product color correcting method is implemented.

The examples above mainly elaborate the product color correcting method and the product color correcting system of the present invention. Despite that description is made only to some embodiments of the present invention, one skilled in the art shall understand that the present invention may be applied in many other forms without a deviation from its major idea and scope. Thus, the examples and embodiments presented are deemed as schematic and unlimited ones; and, the present invention may cover all types of amendments and substitution without a deviation from its spirit and scope as defined by each of the claims attached.

## Claims

1. A product color correcting method, comprising:
- an acquiring step to acquire current color parameters of a product by using a mobile terminal to photograph the product, optionally to acquire RGB parameters of the product as the current color parameters of the product;
- a comparing step to obtain a comparison result by comparing the current color parameters of the product with target color parameters of the product, and to output the comparison result as a color parameter bias between the target color parameters of the product and the current color parameters of the product; and
- a correcting step to acquire, based on a first corresponding relationship between a pre-stored color parameter bias and a correction to the formulation for the color of the product, the correction to the formulation for the color of the product corresponding to the color parameter bias output in the comparing step.

2. The product color correcting method according to claim 1, further comprising, between the acquiring step and the comparing step, a calibrating step to calibrate the current color parameters of the product acquired by the acquiring step, and obtain calibrated current color parameters of the product,
wherein, in the comparing step, the calibrated current color parameters of the product are compared with the target color parameters of the product and, as the comparison result, the color parameter bias between the calibrated current color parameters of the product and the target color parameters of the product is output, and
wherein, in the correcting step, the correction to the formulation for the color of the product corresponding to the color parameter bias between the calibrated current color parameters and the target color parameters of the product is obtained based on the first corresponding relationship.

3. The product color correcting method according to claim 2, wherein, in the calibrating step, a colorimetric standard product photographed in a photographing condition that is the same as the photographing condition of the product is employed to calibrate the current color parameters of the product obtained in the acquiring step, so as to acquire the calibrated current color parameter of the product.

4. The product color correcting method according to claim 2, wherein in the acquiring step, the product color is photographed, as the current color parameters of the product, to acquire RGB parameters, and the comparing step comprises:
comparing calibrated current RGB parameters of the product with target RGB parameters of the product; and
as the color parameter bias, a difference value is obtained between the calibrated current RGB parameters of the product and the target RGB parameters of the product.

5. The product color correcting method according to claims 1 or 2, wherein, the correcting step comprises the following sub-steps:
- pre-storing the first corresponding relationship between the color parameter bias and the correction to the formulation for the color of the product, and pre-storing a second corresponding relationship between the color parameter bias and relevant potential causes;
- acquiring, based on the comparison result, the correction to the formulation for the color of the product corresponding to the color parameter bias, as well as the relevant potential causes, according to the first corresponding relationship and the second corresponding relationship; and
- providing based on the probability sequence of the occurrence of each of the relevant potential causes, the correction to the formulation of a plurality of the product colors with a priority sequence.

6. The product color correcting method according to claim 1 or 2, wherein the product is one or more of the following: a polyurethane paint, polycarbonate and a polycarbonate composition,
in which the polyurethane paint comprises polyurethane water-based paints.

7. A product color correcting system, comprising:
- a color parameter acquiring component for acquiring current color parameters of a product, optionally comprised in a mobile terminal; and
- a correction providing component for comparing the current color parameters of the product with target color parameters of the product to obtain a comparison result, outputting the comparing result as a color parameter bias between the current color parameters of the product and the target color parameters of the product, and acquiring, based on a first corresponding relationship between a pre-stored color parameter bias and a correction to the formulation for the color of the product, the correction to the formulation for the color of the product corresponding to the color parameter bias, wherein the correction providing component is optionally comprised in the mobile terminal together with the color parameter acquiring component or in in a backend server distant from the mobile terminal.

8. The product color correcting system according to claim 7, wherein, the mobile terminal comprises:
a camera for photographing a color image of the product;
a color parameter acquiring module for acquiring current color parameters of the product based on the color image;
a calibrating module for calibrating the current color parameters of the product and obtaining calibrated current color parameters of the product; and
a first communicating module for communicating with the backend server.

9. The product color correcting system according to claim 8, wherein the backend server comprises:
a database for pre-storing target color parameters of the product, and the first corresponding relationship between the color parameter bias and the correction to the formulation for the color of the product;
a second communicating module for communicating with the mobile terminal to receive the calibrated current color parameters of the product; and,
a computing module for comparing the calibrated current color parameters of the product received by the second communicating module with the target color parameters of the product stored in the database to obtain the color parameter bias, and computing, based on the first corresponding relationship, the correction to the formulation for the color of the product corresponding to the color parameter bias.

10. The product color correcting system according to any one of claims 7-9, wherein the product is one or more of the following: a polyurethane paint, polycarbonate and a polycarbonate composition,
in which the polyurethane paints comprises polyurethane water-based paints.

11. A mobile terminal, comprising:
- a camera for photographing a color image of a product;
- a color parameter acquiring module for acquiring current color parameters of the product based on the color image; and,
- a calibrating module for calibrating the current color parameters of the product by using a prepared colorimetric, and obtaining calibrated current color parameters of the product.

12. A backend server, comprising:
- a database for pre-storing target color parameters of the product, and a first corresponding relationship between a color parameter bias and a correction to the formulation for the color of the product;
- a communicating module for receiving, from a mobile terminal, current color parameters of the product; and,
- a computing module for comparing received current color parameters of the product with the target color parameters of the product stored in the database to obtain the color parameter bias, and computing, based on the first corresponding relationship, the correction to the formulation for the color of the product corresponding to the color parameter bias.

13. A mobile terminal, comprising:
- a camera for photographing a color image of a product;
- a color parameter acquiring module for acquiring current color parameters of the product based on the color image;
- a calibrating module for calibrating the current color parameters of the product and obtaining calibrated current color parameters of the product;
- a database for pre-storing target color parameters of the product, and a first corresponding relationship between a color parameter bias and a correction to the formulation for the color of the product; and,
- a computing module for comparing the calibrated current color parameters of the product with the target color parameters stored in the database to obtain the color parameter bias, and computing, based on the first corresponding relationship, the correction to the formulation for the color of the product corresponding to the color parameter bias.

14. A computer-readable memory medium for storing a computer program, wherein, when the program is executed by a processor, the product color correcting method according to any one of claims 1-6 is enabled.

15. A computer device, comprising: a memory, a processor and a computer program stored in a memory and executable in a processor, wherein, when the processor executes the computer program, the product color correcting method according to any one of claims 1-6 is enabled.
